Europäisches Patentamt

European Patent Office

Office européen des brevets

(11) Veröffentlichungsnummer: **0 535 333 A1**

# (12) EUROPÄISCHE PATENTANMELDUNG

(21) Anmeldenummer: **92113488.8**

(22) Anmeldetag: **07.08.92**

(51) Int. Cl.5: **H02P 7/622**, H02M 5/12

(30) Priorität: **26.08.91 DE 4128229**
**27.09.91 DE 4132340**

(43) Veröffentlichungstag der Anmeldung:
**07.04.93 Patentblatt 93/14**

(84) Benannte Vertragsstaaten:
**AT CH DE GB LI NL**

(71) Anmelder: **Loher Aktiengesellschaft**
**Hans-Loher-Strasse 32**
**W-8399 Ruhstorf/Rott(DE)**

(72) Erfinder: **Kremsreiter, Josef, Dipl.-Ing.**
**Anton-Paitner-Weg 3**
**W-8398 Pocking(DE)**

(74) Vertreter: **Zinnecker, Armin, Dipl.-Ing.**
**Lorenz-Seidler-Gossel et al**
**Widenmayerstrasse 23**
**W-8000 München 22 (DE)**

(54) **Schaltungsanordnung mit einem Stromsteller und mit einem Motor, insbesondere mit einem Drehstromsteller und mit einem Drehstrom-Asynchronmotor.**

(57) Eine Schaltungsanordnung besitzt einen Stromsteller und einen Motor, insbesondere einen Drehstromsteller und einen Drehstrom-Asynchronmotor. Um die Oberschwingungen im Stromfluß des Motors bzw. Drehstrom-Asynchronmotors zu reduzieren, ist parallel zu der oder den Wicklungen des Motors jeweils ein Saugkreis geschaltet. Vorzugsweise besteht der Saugkreis aus einer Induktivität ($jX_L$) und einer Kapazität ($-jX_C$), die in Reihe geschaltet sind. Der Saugkreis ist vorzugsweise auf die dominierende Oberschwingung des Stellers abgestimmt.

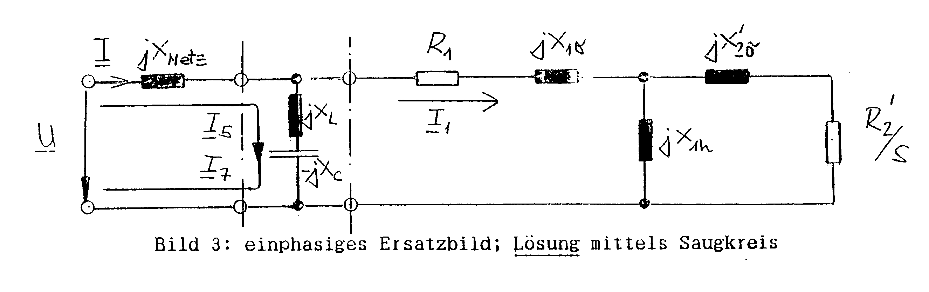

Bild 3: einphasiges Ersatzbild; Lösung mittels Saugkreis

Rank Xerox (UK) Business Services
(3.10/3.5x/3.0.1)

Die Erfindung betrifft eine Schaltungsanordnung mit einem Stromsteller und mit einem Motor, insbesondere mit einem Drehstromsteller und mit einem Drehstrom-Asynchronmotor.

Für Drehstrom-Asynchronmmotoren, die von Drehstromstellern gespeist werden, gibt es verschiedene Anwendungsmöglichkeiten. Beispielsweise werden zum Antrieb von Seilaufzügen heute vielfach Drehstromasynchronmotoren eingesetzt, die von Drehstromstellern gespeist werden. Mit dem Drehstromsteller wird die Motorspannung und damit die Drehzahl-Dremomentkennlinie beeinflußt. Die Motorspannung wird dabei durch eine Spannungsanschnittsteuerung verändert. Die Motorspannung ist deshalb nichtsinusförmig. Neben der Grundschwingung $U_1$ treten unerwünschte Oberschwingungen $U_\nu$ auf. Deren Ordnungszahlen berechnen sich bei einer 6-pulsigen Schaltung zu:

$$\nu = 1 \pm n6, \text{ wobei } n = 0,1,2,3,\ldots$$

Die Oberschwingungen haben die Frequenzen:

$$f_\nu = \nu\, f_1$$

$f_1$ ist die Netzfrequenz, z.B. 50 Hz.

Die Spannungsoberschwingungen $U_\nu$ erzeugen Stromoberschwingungen $I_\nu$, die im Motor Pendelmomente, zusätzliche Verluste und Geräusche verursachen.

In der Zeichnung zeigt

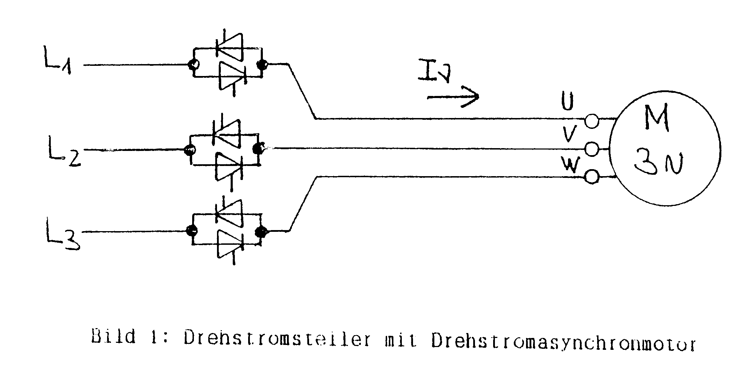

Bild 1    eine schematische Darstellung eines Drehstromstellers mit Drehstromasynchronmotor.

Der als solcher bekannte Drehstromsteller besitzt sechs Thyristoren zur Veränderung der Motorspannung durch Spannungsanschnittsteuerung.

Um die Stromoberschwingungen zu begrenzen, sind bereits verschiedene Maßnahmen vorgeschlagen worden. So hat man versucht, die Stromoberschwingungen durch eine geänderte Auslegung des Motors zu begrenzen. Der Motor wurde derart ausgelegt, daß er eine größere Streureaktanz aufweist. Weiterhin hat man versucht, die Stromoberschwingungen durch ein Tiefpaßfilter zu begrenzen.

Beide Maßnahmen führten jedoch nicht zum Erfolg. Die Motorstreureaktanz kann man nicht genügend groß machen, weil der Motor dann kein ausreichendes Kippmoment mehr hätte. Die bei einem Tiefpaßfilter in Reihe zur Motorwicklung liegende Drossel wirkt sich ebenfalls wie eine größere Streureaktanz aus, hat also die beschriebenen negativen Folgen. Zur Erläuterung zeigt

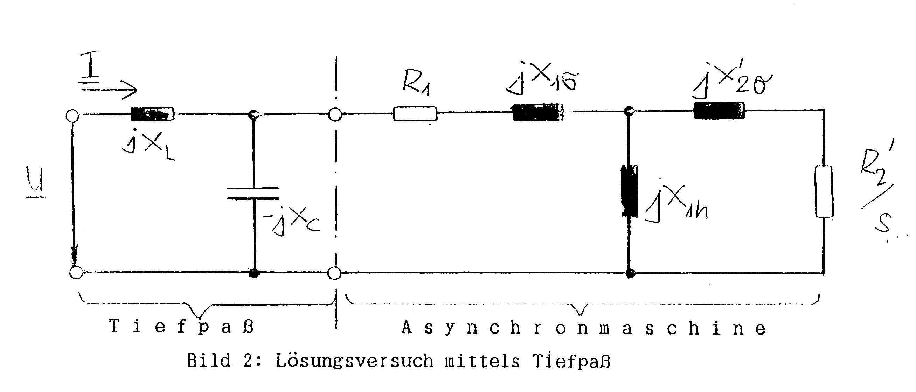

Bild 2    eine schematische Darstellung eines Tiefpaßfilters und einer Asynchronmaschine.

Der Tiefpaß besteht aus einer Induktivität $jX_L$ und einer Kapazität $-jX_C$. Die als Ersatzschaltbild dargestellte Asynchronmaschine besteht aus einem Widerstand $R_1$, einer ersten Induktivität $jX_{1\delta}$, einer zweiten Induktivität $jX'_{2\delta}$, einer dritten Induktivität $jX_{1h}$ und einem zweiten Widerstand $R'_{2/s}$.

Aus Emmert: "Leistungsstufen für das Regelsystem TELEPERM C" in Siemens-Zeitschrift, Band 45, 1971, Heft 10, Seiten 736 bis 740 ist eine Schaltungsanordnung nach dem Oberbegriff des Anspruchs 1 bekannt.

In Heumann: "Grundlagen der Leistungselektronik", Teubner-Verlag Stuttgart, 1978, Seiten 72, 73, 100 bis 103 ist ein dreiphasiger Drehstromsteller beschrieben. Ferner wird dort erläutert, daß der Drehstromsteller aufgrund seiner Phasenanschnittsteuerungen Oberschwingungen aufweist.

Aus der US-PS 46 23 830 ist ein Drehstrom-Asynchronmotor bekannt, der von einem Zwischenkreisumrichter gespeist wird. Parallel zu den Wicklungen des Drehstrom-Asynchronmotors ist jeweils ein Saugkreis geschaltet, der aus einer Induktivität und einer Kapazität besteht, die in Reihe geschaltet sind. Für die Oberschwingungen $I_5$ und $I_7$ ist jeweils ein Saugkreis vorhanden.

Die EP-OS 221 247 zeigt eine Schaltungsanordnung, die im wesentlichen mit derjenigen der US-PS 46 23 830 übereinstimmt. Es ist allerdings nur ein Saugkreis für die fünfte Oberschwingung vorhanden.

Aus der DE-OS 38 19 934 ist eine Aufzugsanlage bekannt, die von einem Asynchronmotor betrieben wird, der durch einen Stromzwischenkreisumrichter angesteuert wird.

Aufgabe der Erfindung ist es, bei einer Schaltungsanordnung nach dem Oberbegriff des Anspruchs 1 die Oberschwingungen im Stromfluß des Motors zu reduzieren.

Erfindungsgemäß wird diese Aufgabe nach den im Kennzeichnungsteil des Anspruchs 1 angegebenen Merkmalen dadurch gelöst, daß parallel zu der oder den Wicklungen des Motors jeweils ein Saugkreis geschaltet ist. Durch den Saugkreis, der parallel zu der bzw. jeder Motorwicklung geschaltet ist, wird ein Stromfluß der Oberschwingungen im Motor verhindert oder doch zumindest so weit reduziert, daß keine störenden Pendelmomente, Geräusche oder Zusatzverluste mehr auftreten.

Die Stromoberschwingungen werden durch die Spannungsoberschwingungen nach dem Steller verursacht. Sie breiten sich von der Netzspannungsquelle zum Steler hin aus. Der Betrag der zu erwartenden Stromoberschwingung ist nicht festgelegt oder vorab bestimmbar, und zwar deshalb, weil die Netzimpedanz variabel ist. Im Gegensatz zu Systemen mit Stromzwischenkreisumrichtern, die eine Stromquelle darstellen, fließt bei Systemen mit einem Stromsteller, also mit einer Spannungsquelle kein eingeprägter Strom. Die Netzspannung ist bei einem System mit einem Stromsteller überall - bis zum Motor - wirksam.

Bei einer Schaltungsanordnung mit einem Stromzwischenkreisumrichter (wie beispielsweise nach der US-PS 46 23 830 oder der EP-OS 221 247) handelt es sich um eine Stromquelle. Wegen der Zwischenkreisdrossel, die als Energiespeicher fungiert, fließt ein eingeprägter Strom, dessen Effektivwerte (Grund- und Oberschwingung) genau festgelegt und bestimmbar sind und mittels Saugkreisen vor dem Motor oder vor dem Netzgleichrichter "abgesaugt" werden können. Die Richtung der Stromoberschwingung ist von der Zwischenkreisdrossel (Speicherdrossel) zum Netz hin.

Demgegenüber ist bei der erfindungsgemäßen Schaltungsanordnung ein Stromsteller vorhanden. Durch den Saugkreis wird nicht eine Stromschwingung kurzgeschlossen, sondern eine Spannungschwingung.

Vorteilhafte Weiterbildungen der Erfindung sind in den Unteransprüchen beschrieben.

Vorzugsweise besteht der Saugkreis aus einer Induktivität und einer Kapazität, die in Reihe geschaltet sind.

Nach einer weiteren vorteilhaften Weiterbildung ist der Saugkreis auf die dominierende Oberschwingung des Stellers abgestimmt. Bei einer 6-pulsigen Schaltung des Stellers ist dies die fünfte Oberschwingung $I_5$. Wenn die Netzfrequenz 50 Hz beträgt, beträgt die fünfte Oberschwingung, also die dominierende Oberschwingung, 250 Hz.

Eine weitere vorteilhafte Weiterbildung ist dadurch gekennzeichnet, daß der Saugkreis auf eine Frequenz abgestimmt ist, die etwas geringer ist als die dominierende Oberschwingung. Im Falle einer 6-pulsigen Schaltung und einer Netzfrequenz von 50 Hz ist der Saugkreis dementsprechend vorzugsweise auf eine Frequenz abgestimmt, die etwas geringer ist als 250 Hz, vorzugsweise 232 Hz. Wenn der Saugkreis genau auf die dominierende Oberschwingung (im Beispielsfall also genau auf 250 Hz) abgestimmt ist, besteht bei einer zu geringen Netzimpedanz die Gefahr eines Kurzschlusses. In diesem Fall muß also eine gewisse Netzimpedanz vorhanden sein, da andernfalls der Strom der fünften Oberschwingung zu groß werden würde. Bei einer verhältnismäßig großen Netzimpedanz entstehen bei einer Abstimmung des Saugkreises auf die dominierende Oberschwingung keine Probleme. Wenn allerdings die Netzimpedanz verhältnismäß klein ist, wird die Resonanzfrequenz des Saugkreises vorzugsweise auf einen Wert festgelegt, der etwas geringer ist als die dominierende Oberschwingung. Im Falle eines 6-pulsigen Stellers und einer Netzfrequenz von 50 Hz hat sich die Abstimmung des Saugkreises auf 232 Hz bewährt.

Ferner ist zu beachten, daß die Streuimpedanz des Motors mit der Netzimpedanz parallelgeschaltet ist. Da sich Impedanzen im Prinzip wie Ohmsche Widerstände verhalten, bedeutet dies, daß die Gesamtimpedanz im wesentlichen durch die niedrigere Impedanz festgelegt wird. Wenn also der Motor eine verhältnismäßig geringe Streuimpedanz hat, wird die Gesamtimpedanz durch diese verhältnismäßig geringe Streuimpedanz des Motors festgelegt; die Netzimpedanz ist demgegenüber kaum mehr von Bedeutung. Selbst wenn also die Netzimpedanz verhältnismäßig hoch sein sollte, wird die Gesamtimpedanz aufgrund der verhältnismäßig geringen Streuimpedanz dennoch sehr niedrig. Auch bei einer niedrigen Streuimpedanz des Motors ist es also - unabhängig von der Größe der Netzimpedanz - von Vorteil, wenn der Saugkreis auf eine Frequenz abgestimmt ist, die etwas geringer ist als die Frequenz der dominierenden Oberschwingung.

Durch eine Abstimmung des Saugkreises auf eine Frequenz, die etwas größer ist als die Frequenz der dominierenden Oberschwingung kann die beschriebene günstige Wirkung nicht erreicht werden, da sich dadurch im Endergebnis eine kapazitive Belastung aus dem Saugkreis ergeben würde, durch die die Netzimpedanz ganz oder teilweise kompensiert werden würde, so daß der Strom noch mehr ansteigen würde, die Gefahr eines Kurzschlusses also erhöht werden würde.

Eine weitere vorteilhafte Weiterbildung ist dadurch gekennzeichnet, daß parallel zu der oder den Wicklungen des Motors jeweils einer oder mehrere weitere Saugkreise geschaltet sind, die auf eine oder mehrere über der dominierenden Oberschwingung liegende Oberschwingungen abgestimmt sind. Auch diese Saugkreise bestehen vorzugsweise aus einer Induktivität und einer Kapazität, die in Reihe geschaltet sind.

Vorzugsweise wird bei einer 6-pulsigen Schaltung des Drehstromstellers die fünfte Oberschwingung $I_5$ über den Saugkreis abgeleitet.

Eine weitere vorteilhafte Weiterbildung ist dadurch gekennzeichnet, daß vor dem Steller eine Zusatzimpedanz in Reihe mit der Netzimpedanz geschaltet ist. Wenn der Motor eine geringe Streuimpedanz aufweist, wird hierdurch die Impedanz des Motors erhöht, so daß die Möglichkeit geschaffen wird, den Saugkreis genau auf die dominierende Oberschwingung des Stellers abzustimmen. Es ist dann nicht mehr erforderlich, den Saugkreis in der oben beschriebenen Weise auf eine Frequenz abzustimmen, die etwas geringer ist als die dominierende Oberschwingung. Eine Abstimmung des Saugkreises in der Weise, daß die Frequenz des Saugkreises exakt mit der dominierenden Oberschwingung des Stellers übereinstimmt, ist zu bevorzugen, und zwar deshalb, weil dadurch die Filterwirkung des Saugkreises verbessert wird. Je näher die Frequenz des Saugkreises bei der dominierenden Oberschwingung des Stellers liegt, desto besser ist die Filterwirkung; sie ist dann am besten, wenn die Frequenz des Saugkreises mit der dominierenden Oberschwingung des Stellers übereinstimmt.

Der Saugkreis kann zwei Funktionen übernehmen: Zum einen kann er die Oberschwingungen im Stromfluß des Motors reduzieren. Zum anderen kann er auch die Netzblindleistungsaufnahme des Motors reduzieren. Dies erfolgt durch den im Saugkreis vorhandenen Kondensator. Vorzugsweise wird dieser Kondensator derart dimensioniert, daß ein Blindleistungsanteil der Grundschwingung kompensiert wird. Die Größe der Induktivität des Saugkreises kann dann aus der Größe der Kapazität des Kondensators und aus der gewünschten Frequenz des Saugkreises berechnet werden (nach der Formel für die Resonanzfrequenz).

Durch die Erfindung wird eine Schaltungsanordnung geschaffen, die aus einem Drehstrommotor, einem Drehstromsteller und mehreren LC-Filtern besteht und die dadurch gekennzeichnet ist, daß die LC-Filter parallel (in Stern- und Dreieckschaltung) zu den Anschlußklemmen des Drehstrommotors als Saugkreis geschaltet sind und daß die LC-Filter vorzugsweise auf die beiden dominierenden Oberschwingungen abgestimmt sind.

Durch die Erfindung wird erreicht, daß durch den Drehstrommotor ein nahezu sinusförmiger Strom fließt. Hierdurch ergeben sich folgende Vorteile:

- Verringerung von Geräuschen;
- Verringerung von Pendelmomenten;
- Verringerung von Zusatzverlusten (Eisen- und Stromwärmeverluste);
- größere Ausnutzung des Drehstrommotors;
- längere Lebensdauer des Drehstrommotors.

Ein weiterer Vorteil liegt darin, daß (insbesondere bei einer Nachrüstung) bestehende Anlagen nicht geändert werden müssen. Bei bestehenden Anlagen muß also insbesondere die Motorauslegung und die Konstruktion nicht geändert werden. Wenn die Schaltungsanordnung für einen Seilaufzug verwendet wird, ergibt sich ein höherer Fahrkomfort.

Die Erfindung ist bei einer Schaltungsanordnung mit einem Drehstrom-Asynchronmotor und mit einem Drehstromsteller besonders gut verwendbar. Sie ist aber auch bei einphasigen Asynchronmotoren verwendbar, und zwar dann, wenn die Motorspannung über einen Steller verändert wird und sich somit Oberschwingungen in der Spannung ergeben. Dementsprechend kann die Erfindung verwendet werden bei beispielsweise Einphasenmotoren ohne Hilfswicklung, Einphasenmotoren mit Kondensatorhilfsphase, Drehstrommotoren in Steinmetzschaltung und Spaltpolmotoren. Die Erfindung ist auch bei anderen als Asynchronmotoren anwendbar. Prinzipiell ist die Erfindung dort anwendbar, wo aufgrund eines vorgeschalteten Stellers nichtsinusförmige Ströme zu erwarten sind, beispielsweise bei der Drehzahlsteuerung eines Universalmotors durch eine Triacschaltung.

Ein Ausführungsbeispiel wird nachstehend anhand der Zeichnung erläutert. In der Zeichnung zeigt

Bild 3 ein einphasiges Ersatzschaltbild eines Asynchronmotors mit einem Saugkreis, der auf die dominierende Oberschwingung ($I_5$) des Stellers abgestimmt ist,

Bild 4 ein einphasiges Ersatzschaltbild eines Asynchronmotors mit zwei Saugkreisen, die auf die dominierende Oberschwingung ($I_5$) und auf die über der dominierenden Oberschwingung liegende Oberschwingung ($I_7$) des Stellers abgestimmt sind,

Bild 5 den Verlauf des Motorstroms über der Zeit bei einer Schaltungsanordnung ohne Saugkreis,

Bild 6 den Verlauf des Motorstroms über der Zeit bei einer Schaltungsanordnung mit Saugkreis,

Bild 7 den Verlauf des Netzstroms über der Zeit bei einer Schaltungsanordnung mit Saugkreis,

Bild 8 den Verlauf der Motorspannung über der Zeit bei einer Schaltungsanordnung ohne Saugkreis und

Bild 9 den Verlauf der Motorspannung über der Zeit bei einer Schaltungsanordnung mit Saugkreis.

Bild 3 zeigt ein einphasiges Ersatzbild des Motors mit Saugkreis. Im rechten Teil von Bild 3 ist das Ersatzschaltbild des Drehstrom-Asynchronmotors dargestellt, das mit demjenigen des Bildes 2 übereinstimmt, so daß auf die diesbezüglichen obigen Erläuterungen verwiesen werden kann. Parallel zum Motor ist der Saugkreis geschaltet, der aus einer Reihenschaltung der Induktivität $jX_L$ und der Kapazität $-jX_C$ besteht. Weiterhin wirkt die Netz-Induktivität, dargestellt durch die Induktivität $jX_{Netz}$. Aus der vereinfachten Darstellung von Bild 3 ist die Wirkungsweise der Schaltung ersichtlich. Der Saugkreis ist auf die dominierende Oberschwingung des Drehstromstellers abgestimmt. Bei einer 6-pulsigen Schaltung und einer Netzfrequenz $f_1 = 50$ Hz wird die besonders störende Oberschwingung $I_5$ mit $f_5 = 250$ Hz über den Saugkreis abgeleitet. $X_{Netz}$ ist die Netzreaktanz.

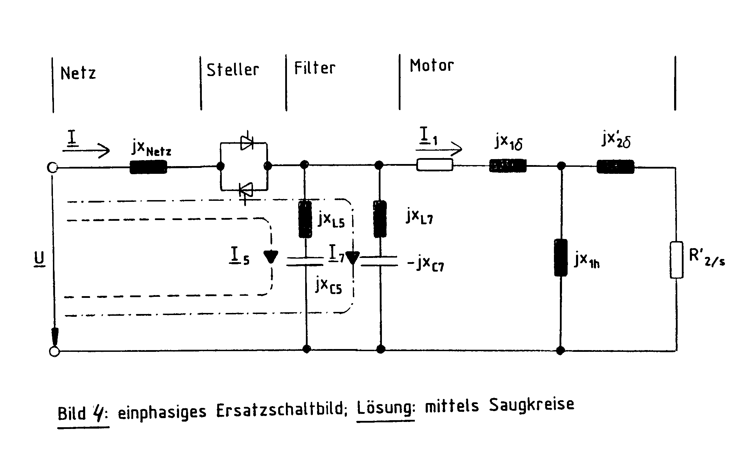

Bild 4 zeigt ein einphasiges Ersatzschaltbild eines Drehstrom-Asynchronmotors, das sich gegenüber demjenigen des Bildes 3 zunächst dadurch unterscheidet, daß bei Bild 4 auch der Steller eingezeichnet ist (der auch bei dem Motor nach Bild 3 vorhanden, jedoch aus Gründen der einfacheren zeichnerischen Darstellung in der Zeichnung weggelassen ist). Ferner sind bei der Schaltung nach Bild 4 zwei Saugkreise vorhanden. Der erste Saugkreis besteht aus der Induktivität $jX_{L5}$ und aus der Kapazität $jX_{C5}$. Er ist auf die dominierende Oberschwingung $I_5$ des Stellers abgestimmt.

Parallel zum ersten Saugkreis ist der zweite Saugkreis geschaltet, der aus der Induktivität $jX_{L7}$ und der mit dieser in Reihe geschalteten Kapazität $-jX_{C7}$ besteht. Dieser zweite Saugkreis ist auf die Oberschwingung $I_7$ abgestimmt, also auf die erste über der dominierenden Oberschwingung $I_5$ liegende Oberschwingung $I_7$. Je nach Bedarf können darüber hinaus weitere Saugkreise parallel geschaltet werden, die entsprechend der oben angegebenen Formel bei einer 6-pulsigen Schaltung auf die Oberschwingungen $I_{11}$, $I_{13}$, $I_{17}$, $I_{19}$ usw. abgestimmt sind. In der Praxis ist es jedoch im allgemeinen ausreichend, nur einen oder höchstens zwei Saugkreise vorzusehen.

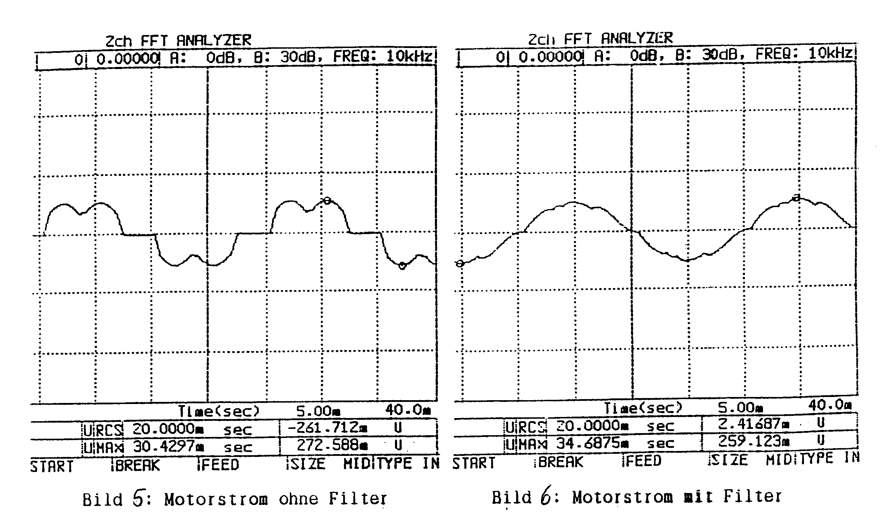

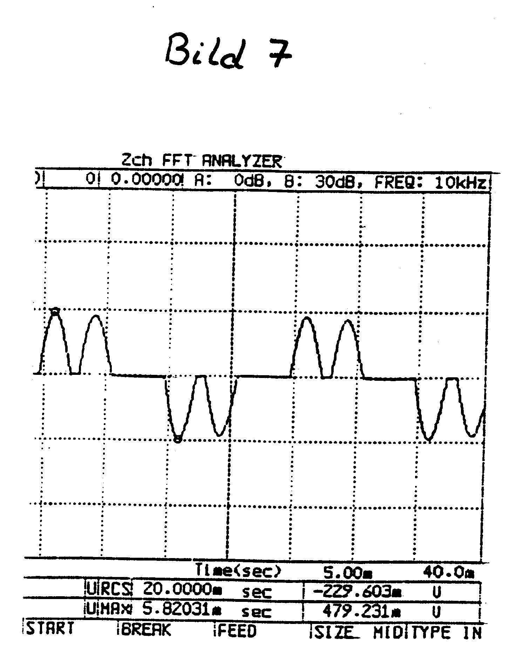

Die Bilder 5, 6 und 7 zeigen den Verlauf des Motorstroms ohne (Bild 5) und mit (Bild 6) Saugkreis sowie den Verlauf des Netzstroms mit Saugkreis (Bild 7). In Bild 5 ist der Motorstrom ohne Saugkreis dargestellt. Eine Frequenzanalyse ergibt, daß der Anteil der dominierenden Oberschwingung $I_5$ = 250 Hz 26,49 % beträgt. Der Motorstrom ohne Saugkreis gemäß Bild 5 ist dabei gleich dem Netzstrom ohne Saugkreis. Wenn kein Saugkreis vorhanden ist, ist nämlich der Motorstrom mit dem Netzstrom identisch.

Wenn ein Saugkreis, der auf die Frequenz der dominierenden Oberschwingung $I_5$ = 250 Hz abgestimmt ist, zugeschaltet wird, ergibt sich der in Bild 6 dargestellte zeitliche Verlauf des Motorstroms und der in Bild 7 dargestellte zeitliche Verlauf des Netzstroms. Eine Frequenzanalyse ergibt, daß bei dem Motorstrom der Anteil der dominierenden Oberschwingung $I_5$ = 250 Hz nur noch 2,75 % beträgt. Beim Netzstrom hat sich der Anteil der dominierenden Oberschwingung $I_5$ = 250 Hz auf 66,09 % erhöht. Der Motorstrom ist demnach durch den Saugkreis auf Kosten des Netzstromes geglättet worden.

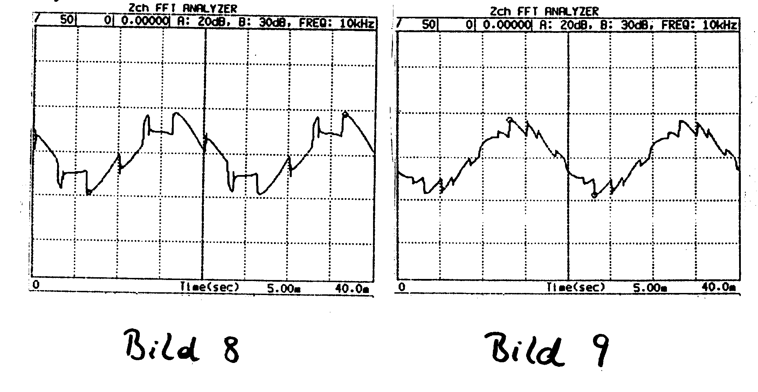

In Bild 8 ist der zeitliche Verlauf der Motorspannung bei einer Schaltungsanordnung ohne Saugkreis dargestellt. Eine Frequenzanalyse ergibt, daß der Anteil der fünften Oberschwingung $I_5$ = 250 Hz 27,79 % beträgt. Wenn ein auf die dominierende Oberschwingung $I_5$ = 250 Hz abgestimmter Saugkreis hinzugefügt wird, ergibt sich der in Bild 9 gezeigte zeitliche Verlauf der Motorspannung. Eine Frequenzanalyse führt zu dem Ergebnis, daß der Anteil der dominierenden Oberschwingung $I_5$ = 250 Hz nur noch 2,40 % beträgt.

In einer Testanlage verringerte sich das Motorgeräusch in der 250 Hz-Oktave durch den Saugkreis um 7 dB (A).

**Patentansprüche**

1. Schaltungsanordnung mit einem Stromsteller und mit einem Motor, insbesondere mit einem Drehstromsteller und mit einem Drehstrom-Asynchronmotor,

   dadurch gekennzeichnet,

   daß parallel zu der oder den Wicklungen des Motors jeweils ein Saugkreis geschaltet ist.

2. Schaltungsanordnung nach Anspruch 1, dadurch gekennzeichnet, daß der Saugkreis aus einer Induktivität ($jX_L$) und einer Kapazität ($-jX_C$) besteht, die in Reihe geschaltet sind,

3. Schaltungsanordnung nach Anspruch 1 oder 2, dadurch gekennzeichnet, daß der Saugkreis auf die dominierende Oberschwingung ($I_5$) des Stellers abgestimmt ist.

4. Schaltungsanordnung nach einem der vorhergehenden Ansprüche, daß der Saugkreis auf eine Frequenz abgestimmt ist, die etwas geringer ist als die dominierende Oberschwingung.

5. Schaltungsanordnung nach Anspruch 3 oder 4, dadurch gekennzeichnet, daß parallel zu der oder den Wicklungen des Motors jeweils einer oder mehrere weitere Saugkreise geschaltet sind, die auf eine oder mehrere über der dominierenden Oberschwingung ($I_5$) liegende Oberschwingungen ($I_7$) abgestimmt sind.

6. Schaltungsanordnung nach einem der vorhergehenden Ansprüche, dadurch gekennzeichnet, daß der Saugkreis derart dimensioniert ist, daß bei einer 6-pulsigen Schaltung des Drehstromstellers die Oberschwingung $I_5$ über den Saugkreis abgeleitet wird.

7. Schaltungsanordnung nach einem der vorhergehenden Ansprüche, dadurch gekennzeichnet, daß vor dem Steller eine Zusatzimpedanz in Reihe mit der Netzimpedanz geschaltet ist.

Bild 1: Drehstromsteller mit Drehstromasynchronmotor

Bild 2: Lösungsversuch mittels Tiefpaß

EP 0 535 333 A1

Bild 3: einphasiges Ersatzbild; Lösung mittels Saugkreis

Bild 4: einphasiges Ersatzschaltbild; Lösung: mittels Saugkreise

Bild 5: Motorstrom ohne Filter

Bild 6: Motorstrom mit Filter

EP 0 535 333 A1

# Bild 7

2ch FFT ANALYZER

| )| | O| 0.00000 | A: 0dB, B: 30dB, FREQ: 10kHz |

| | | Time(sec) | 5.00m | 40.0m |
| U|RCS | 20.0000m | sec | -229.603m | U |
| U|MAx | 5.82031m | sec | 479.231m | U |

START    BREAK    FEED        SIZE  MID TYPE IN

EP 0 535 333 A1

Bild 9

Bild 8

12

| | EINSCHLÄGIGE DOKUMENTE | | EP 92113488.8 |
|---|---|---|---|
| **Kategorie** | **Kennzeichnung des Dokuments mit Angabe, soweit erforderlich, der maßgeblichen Teile** | **Betrifft Anspruch** | **KLASSIFIKATION DER ANMELDUNG (Int. Cl ⁵)** |
| Y | A. HOFFMANN, K. STOCKER "Thyristor-Handbuch" 4. völlig überarbeitete und erweiterte Auflage, 1976, SIEMENS AKTIENGESELL-SCHAFT, Berlin, München, Seiten 312-318 * Seite 313, Zeile 13 - Seite 315, Zeile 5 * -- | 1 | H 02 P 7/622 H 02 M 5/12 |
| D,Y | US - A - 4 623 830 (PENEDER et al.) * Zusammenfassung; Spalte 2, Zeilen 31-65; Spalte 3, Zeilen 18-33; Fig. 2 * | 1 | |
| A | -- | 2 | |
| A | DE - A - 3 610 044 (LICENTIA) * Spalte 1, Zeilen 45-59; Spalte 2, Zeilen 42-64; Fig. 2 * -- | 1,2 | **RECHERCHIERTE SACHGEBIETE (Int. Cl ⁵)** |
| D,A | EP - A - 0 221 247 (BBC AKTIENGESELLSCHAFT) * Zusammenfassung; Fig. 1 * -- | 1,2 | H 02 P H 02 M H 02 J |
| A | DE - A - 3 626 812 (LOHER GMBH) * Zusammenfassung; Anspruch 1 * ---- | 1 | |

Der vorliegende Recherchenbericht wurde für alle Patentansprüche erstellt.

| **Recherchenort** | **Abschlußdatum der Recherche** | **Prüfer** |
|---|---|---|
| WIEN | 17-12-1992 | HAJOS |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, überein-stimmendes Dokument

EPA Form 1503 03 82